# EUROPEAN PATENT APPLICATION

(11) **EP 0 738 952 A2**
(43) Date of publication of application: **23.10.1996**
(21) Application number: 96302485.6
(22) Date of filing: 09.04.1996
(51) Int. Cl.: G06F 3/033

(54) **Method and apparatus for selecting an edit object displayed on a display screen**

(30) Priority: 21.04.1995 JP 96934/95
(71) Applicant: International Business Machines Corporation, Armonk, N.Y. 10504 (US)
(72) Inventor: Hama, Toshiyuki, Tokyo-to (JP); Misono, Shinji, Tokyo-to (JP); Iwano, Kazuo, Yokohama-shi, Kanagawa-ken (JP)
(74) Representative: Horner, David Richard

(57) **Abstract**

The present invention provides a method and apparatus for improving the efficiency of an editing operation by enabling a desired one from a plurality of edit objects existing on a display screen to be selected with an accurate and simple operation. An edit object is preferably selected by the steps of displaying a plurality of edit objects such as figures or characters closely arranged or overlapped in a display screen of a display 1, moving a pointer displayed in the main screen by a pointing device 2 so as to specify a desired position of the main screen, and determining with a candidate selecting device 4 whether or not a plurality of edit objects exists at a specified pointer position or in a predetermined region based on the specified position. If there exists a plurality of edit objects, the edit objects existing at the position or in the predetermined region are selected as selective candidates, a subscreen is displayed in the display screen by a subscreen display device 5, the subscreen having a plurality of information regions, the respective information regions being caused to correspond to respective selective candidates, the pointer is moved in the subscreen by the pointing device 2, and the display of the edit object in the main screen which corresponds to the information region indicated at the pointer position in the subscreen is changed by highlighting or a specific colour. By specifying one of the information regions displayed in the subscreen by the input means, one of the edit objects corresponding to the specified information region is selected and notified to an application 6.

## Description

### Field of the invention

The present invention relates to a method and apparatus for selecting a desired edit object displayed on a display screen.

### Background art

A typical method for selecting a desired one of a plurality of edit objects displayed on a display screen with a pointing device such as a mouse or track ball which is a common input device includes moving a pointer to the display position of a desired edit object and directly specifying it. Another method involves moving a pointer near the display position of a desired edit object and forming a rectangle surrounding the edit object for selection.

In a case where graphics are generated by using a commonly used graphics application or a CAD application, an operator often performs an operation to select one of a plurality of edit objects, such as figures or characters, that are adjacently displayed, or an operation to select one of them displayed in an overlapped manner.

The selection operation when a plurality of edit objects are close requires moving the pointer exactly to the display position of the desired edit object. The movement of the pointer is critical because another edit object could be erroneously selected only by slightly moving the position of the pointer; hence it is an operation that is difficult for the operator. When a plurality of edit objects are overlapped, the system is generally designed to select the uppermost figure in the display screen. Thus, when it is intended to select a lower figure, an operation is required to change the vertical relationship between the overlapped figures so that the desired figure becomes the uppermost one. Such an operation is troublesome for the operator.

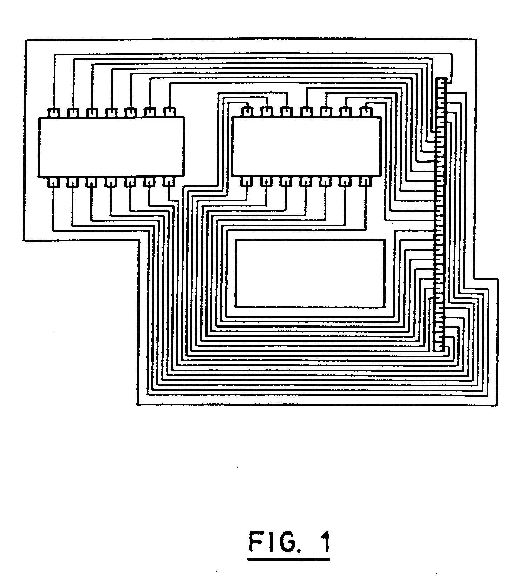

Figure 1 is a wiring pattern of a printed circuit board. When the wiring pattern shown in the Figure is edited, the operator is required to frequently perform the above-mentioned operations. This is because, as shown in Figure 1, a plurality of wiring forming the edit objects are closely arranged, so that delicate movement of the pointer is necessary for selecting a desired wiring. In addition, it is because an operation is necessary for changing the vertical relationship of respective layers due to situations where respective layers constituting a multilayer board are displayed in an overlapped state.

As described, the operator is required to perform a difficult or troublesome operation in a case where a plurality of figures exist in a complicated manner such as a case where the edit objects are closely arranged or overlapped. It is an object of the present invention to improve the efficiency of the editing operation by enabling a desired edit object on a display screen to be selected with an accurate and simple operation.

### Summary of the invention

Viewed from a first aspect the present invention provides a method of selecting a desired one of a plurality of edit objects displayed on a display screen, the method comprising the steps of: displaying a plurality of edit objects in a main screen area of said display screen; specifying via an input means a desired position of said main screen area; if there exists a plurality of edit objects at said specified position or within a predetermined region based on said specified position, selecting said plurality of edit objects as selective candidates; displaying a subscreen on said display screen, said subscreen having a plurality of information regions, the respective information regions being arranged to correspond to said respective selective candidates; enabling a user to move a pointer within said subscreen; changing the display of said edit object in said main screen area that corresponds to said information region containing said pointer position in said subscreen, so as to facilitate user recognition of the edit object corresponding to that information region; and specifying one of said information regions displayed in said subscreen, whereby one of said edit objects corresponding to said specified information region is selected.

Viewed from a second aspect the present invention provides an apparatus for selecting a desired one of a plurality of edit objects displayed on a display screen, the apparatus comprising: display means for displaying a plurality of edit objects in said display screen;input means for enabling a desired position of said display screen to be specified; selection means for determining whether or not a plurality of said edit objects exists at said specified position or within a predetermined region based on said specified position, and, if there exists a plurality of edit objects, for selecting said plurality of edit objects as selective candidates; subscreen display means for displaying a subscreen on said display screen, said subscreen having a plurality of information regions, the respective information regions being arranged to correspond to said respective selective candidates; said input means being arranged to enable a user to move a pointer within said subscreen, the display of said edit object in said display screen corresponding to said information region containing said pointer being changed so as to enable the user to recognize said edit object corresponding to that information region; the user being able to select a desired edit object by specifying via the input device an information region corresponding to the desired edit object.

The present invention provides a method for selecting a desired one of a plurality of edit objects such as figures or characters which are displayed on the display screen in a closely arranged or overlapped manner. Preferably, the method comprises the steps of displaying a plurality of edit objects in a main screen of a display screen, moving a pointer displayed in the main screen by input means so as to specify a desired position of the main screen, determining whether or not a plurality of edit objects exists at the specified pointer position or within a predetermined region based on the specified position and, if there exists a plurality of edit objects, selecting the edit objects existing at the position or within the predetermined region as selective candidates. Further, the method preferably comprises displaying a subscreen on the display screen, the subscreen having a plurality of information regions, the respective information regions being arranged to correspond to respective selective candidates, moving the pointer in the subscreen by the input means, changing the display of the edit object in the main screen which corresponds to the information region indicated at the pointer position in the subscreen to highlighting or a specific colour, and specifying one of the information regions displayed in the subscreen by the input means, whereby one of the edit objects corresponding to the specified information region is selected.

Within such an arrangement, the operator can easily select a desired edit object by moving the pointer in the subscreen while understanding the entire situation in the main screen. It has been found effective for the operator to select the desired object in the subscreen while still being able to confirm the entire arrangement in a drawing or the like in which edit objects with similar shapes are very closely and adjacently arranged.

The subscreen may be an extended screen within a predetermined region based on a position of the pointer specified in the main screen or a specified position, or may be constituted by combining a plurality of transparent tile-shaped information regions which only consist of contour. The tile-shaped information regions may be typically a simple cell structure with the same shape such as a triangle, rectangle, diamond, or hexagon. In addition, the shape of the information regions may be changed depending on the attribute or shape of edit object. The subscreen may be displayed overlapping on the main screen with a pop-up menu. If the subscreen is transparent, it is possible to effectively prevent such a situation where the display of the subscreen prevents the operator from being able to confirm the entire arrangement.

### Brief description of the drawings

The present invention will be described further, by way of example only, with reference to a preferred embodiment thereof as illustrated in the accompanying drawings, in which:
Figure 1 shows a wiring pattern of a printed circuit board;
Figure 2 is a block diagram showing the arrangement of a system in an embodiment of the present invention;
Figure 3 shows a subscreen in the embodiment of the present invention;
Figure 4 is a flowchart illustrating steps for selecting an edit object in the embodiment of the present invention;
Figure 5 is a schematic diagram showing the arrangement of a subscreen corresponding to a selective candidate in the embodiment of the present invention;
Figure 6 is a schematic diagram showing movement of a pointer and highlighting of an edit object on the subscreen in the embodiment of the present invention;
Figure 7 is a diagram showing a state of the subscreen when a plurality of figures are overlapped;
Figure 8 is a schematic diagram showing movement of a pointer and highlighting of an edit object on the subscreen in the embodiment of the present invention; and
Figure 9 is a schematic diagram showing movement of a pointer and highlighting of an edit object on the subscreen in another embodiment of the present invention.

### Description of a Preferred Embodiment

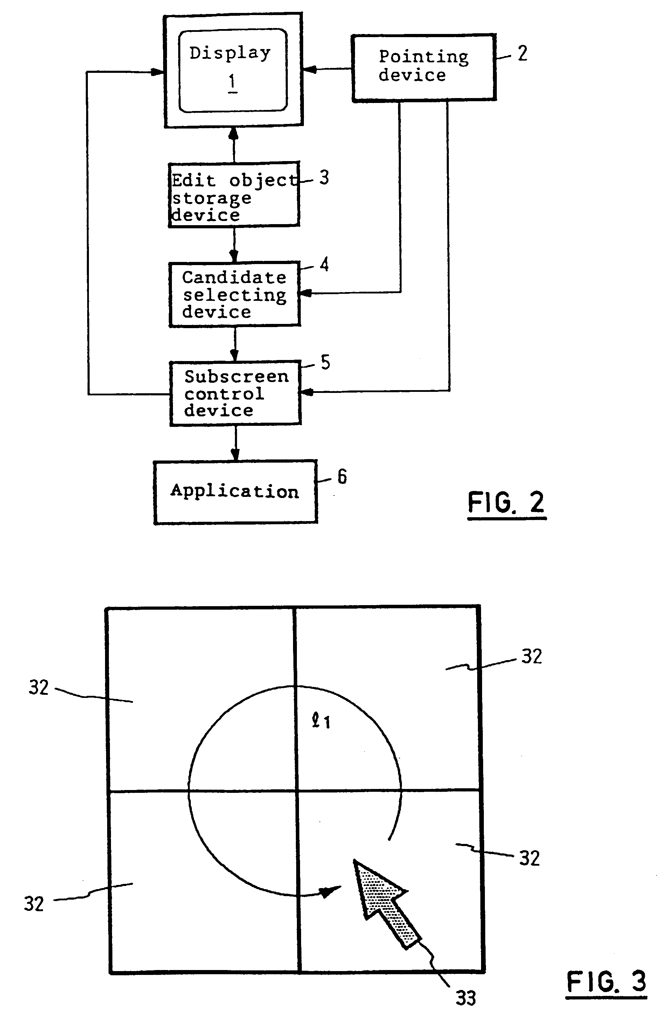

Figure 2 is a block diagram showing the configuration of a system in an embodiment of the present invention. The system comprises a display 1 having a display screen, a pointing device 2 such as a mouse or track ball which is an input device, an edit object storage device 3, a candidate selecting device 4, a subscreen control device 5, and an application 6.

The display 1 is for displaying the screen corresponding to a control signal. The pointing device 2 is a device for moving a pointer on the screen, and for specifying the position of the pointer. An output signal in response to the control of the pointing device 2 is supplied to the display 1, the candidate selecting means 4 and the subscreen control device 5. The edit object storage device 3 is a device for storing information relating to the edit object being edited, and supplies an edit object signal corresponding to the information to the display 1 and the candidate selecting device 4.

The candidate selecting device 4 receives information on the displayed figure from the edit object storage device 3. The information has a tag representing the type of figure (rectangle, circle, line, or character), coordinates of points constituting individual figures, and a data structure consisting of strings (hereinafter called the "figure data"). In addition, the control signal from the pointing device 2 gives the coordinates on the display screen pointed by it. The candidate selecting device 4 compares the region of a predetermined range based on the coordinate value or its position (hereinafter called the "specified region") with the figure data to select the figure data overlapping the specified region as a selective candidate.

The candidate object selected by the candidate selecting device 4 may be an edit object of all attributes, or one with a specific attribute such as a figure only. The candidate selecting device 4 supplies the number of selective candidates and the figure data as a selective candidate signal to the subscreen control device 5.

The subscreen control device 5 displays a subscreen in which information relating to all selective candidates is displayed in response to the selective candidate signal supplied from the candidate selecting device 4 in the display screen. The subscreen control device 5 generates the figure data to be displayed in response to the individual selective candidates, and stores information in a form of data structure adding the reference to figure data of a selective candidate to the generated figure data. In addition, the subscreen control device 5 obtains the coordinate value of the pointing device 2 with the control signal from it, selects a figure data containing the coordinates from the figure data displayed in the subscreen, and identifies the figure data for the selective candidate referenced in the data structure. The identified figure data is supplied to the display 1 as a control signal to change the display of the edit object corresponding to the selective candidate, or is informed to the external application 6 as the selected figure.

The specified region is a region preset in the system such as a region on the screen surrounded by a circle with a diameter of 1 cm around the pointer or a square with a side of 1 cm. First, the system of the embodiment selects as selective candidates any and all edit objects even a part of which is contained in the specified region, and finally selects a desired edit object by selecting any one of these selective candidates. Therefore, because it is necessary that a part of the desired edit object is contained in the specified region, it is important to establish the specified region so that the operation is easy for the operator.

The specified region may be set a fixed value, or may be established in such a manner that the user can change an initially set value. Furthermore, it may be set in such a manner that the specified region varies in connection with the display magnification of the screen. This would further improve the operability for the operator.

Figure 3 shows a subscreen in an embodiment of the present invention. A subscreen 31 is overlappingly displayed on a main screen which is an edit screen (not shown). The subscreen 31 may be displayed as, for example, a pop-up menu. The subscreen 31 consists of a plurality of information regions 32 of the same number as the selective candidates determined by specifying the specified region. Respective information regions 32 are caused to correspond to respective edit objects. The information region 32 is a transparent cell consisting of only a square contour, and the subscreen is constituted by combining the transparent cells. Therefore, even when a transparent subscreen for which only the contour of cell is displayed is overlapped on the main screen, the operator is not hindered by the subscreen, and can understand the entire main screen. Figure 3 shows a subscreen 31 consisting of four information regions 32 which is overlapped and displayed on the main screen when four edit objects are contained in the specified region.

When the subscreen 31 is displayed, the pointer 33 which has been on the main screen is automatically displayed on the subscreen 31. While the subscreen 31 is displayed, the pointer 33 is set to be freely moveable only in the subscreen 31, and prohibited from being moved outside the subscreen 31.

Then, the edit object in the main screen corresponding to the information region 32 indicated by the pointer 33 in the subscreen 31 is changed from a normal display state to a specific display state. The change is, for example, to highlight the contour of the corresponding edit object, or to change its colour to a specific colour. When the operator moves the pointer 33, an edit object corresponding to an information region 32 which the pointer no longer points to changes to the normal display state, and an edit object corresponding to an information region 32 to which the pointer newly points changes to the specific display state.

The operator sequentially changes the display state of the edit object by suitably moving the pointer. Then, when the desired edit object changes its display state, he or she can select the desired edit object by specifying the information region 32. Thus, he or she need not know the correspondence between the information region and the edit object, but can easily select the desired edit object by suitably moving the pointer, the movement of which is limited within the subscreen. It is preferable to use a transparent subscreen only with a contour for the operator also to confirm the edit object highlighted on the edit screen. In addition, since the system limits the movement of the pointer so that the pointer does not move outside the subscreen, the operator need not be aware of the subscreen and can concentrate on the main screen.

It is preferable that the border between the transparent information region and an adjacent information region is distinguishable to confirm the edit object by suitably moving it within the subscreen. Furthermore, because the subscreen is formed by combining the information regions, the information region should preferably have a simple shape. Accordingly, it is not necessary for the information region to be a square, for example it may be a triangle, rectangle, diamond or hexagon. In essence, it is preferable that a plurality of edit objects near a point on the screen pointed to by the pointer can be arranged to be displayed as a menu by causing them to correspond to figures with a size which can be clearly distinguished and specified by the pointer. The information regions are not necessarily to have the same shape, but may have different shape depending on the attribute or shape of the edit object.

The size of the information region displayed on the screen in the embodiment preferably satisfies the following relationship. That is, the shortest one of the distance between the centres of two adjacent information regions displayed is preferably set to be larger than the two closest ones of edit objects displayed as selective candidates. In order for the operator to easily select one of the edit objects close to each other, it is necessary to display the subscreen consisting of the information region or a virtual zoomed screen thereby making the movement of the pointer in the zoomed screen larger than that in the edit screen. Erroneous selection of another adjacent edit object by the operator can be effectively prevented by making the amount of movement on the zoomed screen larger than the distance between two closest edit objects on the edit screen.

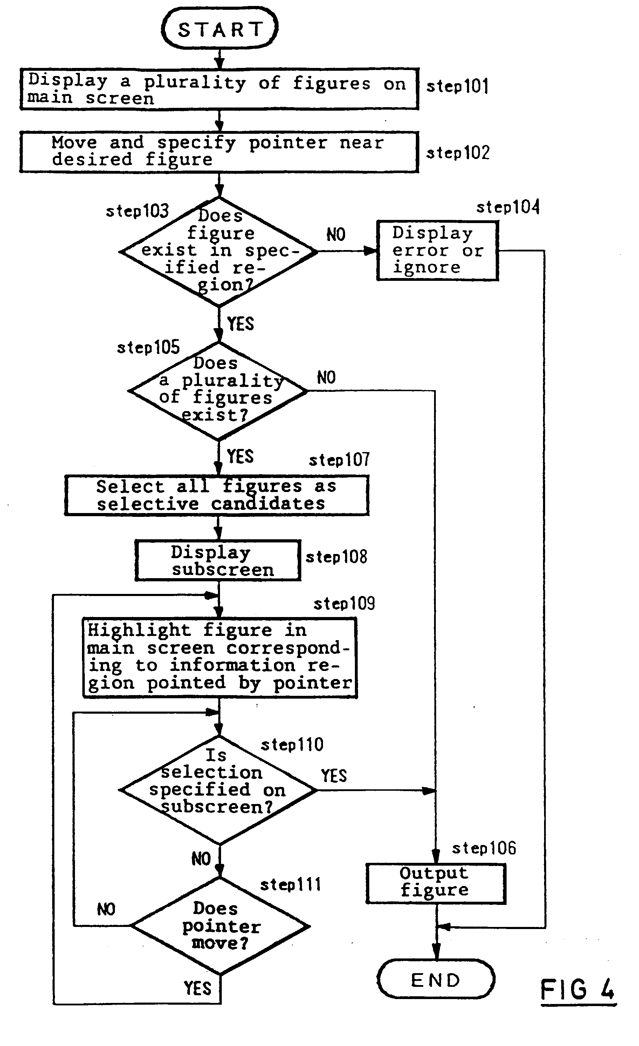

Figure 4 is a flowchart illustrating steps for selecting an edit object in the embodiment of the present invention. A situation will be described where a plurality of figures which are typical examples of edit objects exist in a close relationship.

First, a plurality of figures are displayed as a main screen on the display (step 101). Also displayed on the main screen is a pointer which can be freely moved by an input device. The input device freely moves the pointer displayed in the main screen, and the mouse is clicked near the position in the screen where a desired figure exists (step 102). That is, the mouse is clicked near the position where the desired figure is displayed. At the moment, the pointer does not necessarily point to the exact position where the desired figure exists.

The candidate selecting device determines whether or not a figure exists in the specified region set by the above process (step 103). If not, the process displays an error message or ignores specification from the input device, and terminates (step 104). If a figure exists, the candidate selecting device determines whether or not a plurality of figures exists (step 105). If not, the process selects the one figure in the specified region as the desired figure, and terminates after notifying it to an external application (step 106). If a plurality of figures exists, the candidate selecting device selects all figures as the selective candidates, and provides numbers in a suitable order. Then, it notifies the subscreen control device (step 107).

The subscreen control device displays the subscreen on the main screen in an overlapped manner (step 108). The subscreen consists of a plurality of information regions corresponding to the number of selective candidates provided by the candidate selecting device. Respective information regions are caused to correspond to respective selective candidates. Then, the pointer is moved in the subscreen.

An edit object in the main screen corresponding to the information region pointed to by the pointer is highlighted (step 109). This allows the operator to visually recognize the corresponding edit object.

The operator determines whether or not the highlighted figure in the main screen is the desired figure. If so, a control signal notifying the specification by the pointer is sent to the subscreen control device. If there is no such notification, the process waits for specification of selection if the pointer does not move (steps 110 and 111), and waits for specification of selection after update of the highlighted figure if the pointer moves (steps 109, 110, and 111). Upon receiving the signal indicating the selection of a figure, the subscreen control device selects the highlighted figure (step 106), and the process terminates after output to the external application.

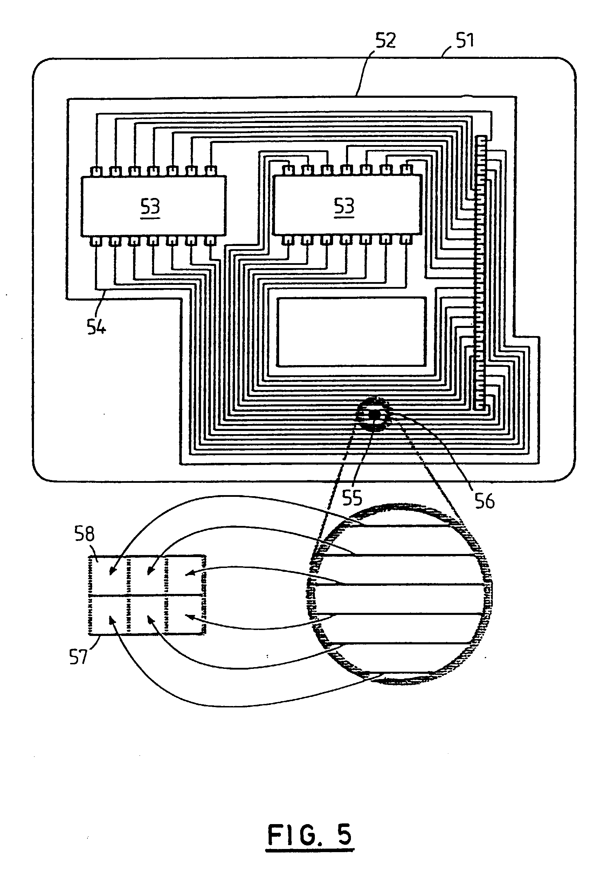

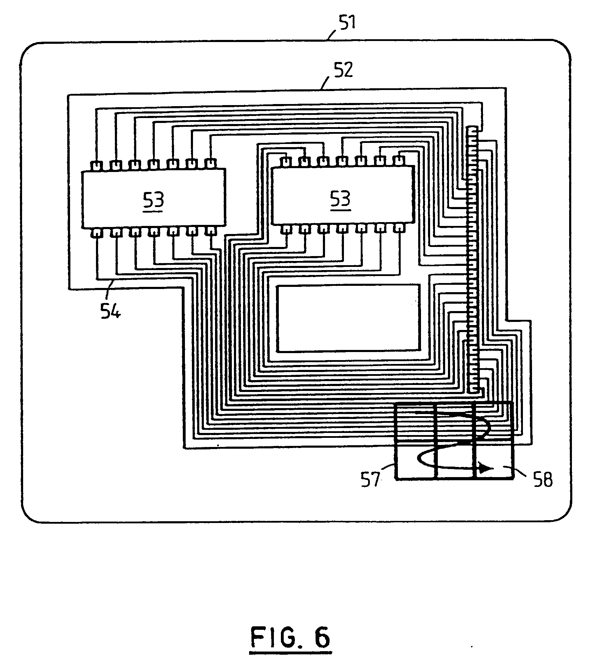

Figure 5 schematically shows the arrangement of a subscreen corresponding to the selective candidate in an embodiment of the present invention. Also, Figure 6 schematically shows movement of the pointer on the subscreen and highlighting of the edit object in the embodiment of the present invention. These figures indicate a state where six wiring lines are selected as the selective candidates and a subscreen having six information regions corresponding to them is displayed.

The main screen 51 shows a wiring pattern diagram 52 of a printed circuit board consisting of IC chips 53 and a number of wiring lines 54 created by CAD. When it is intended to select one of the wiring lines existing in a dense region 56, the pointer is first moved near an area 55. However, it is not necessary that the pointer exactly points to the desired one wiring line. When the area 55 near the position where the desired wiring exists is specified, six wiring lines contained within a region of, for example, a circle 56 with diameter of 1 cm are selected as selective candidates. A transparent subscreen is displayed as a pop-up menu on the main screen, and respective wiring is caused to correspond to respective six information regions 58 in the subscreen 57. Then, when the pointer on the subscreen is moved, wiring in the main screen corresponding to the information region 58 pointed to by the pointer is sequentially highlighted.

Thus, the operator can select the desired wiring while confirming on the entire drawing in the main screen whether or not the highlighted wiring is the desired one. Therefore, even in editing a figure in which similar wiring is arranged in a similar manner, it can effectively prevent misunderstanding of the desired edit object. Furthermore, because a virtually zoomed subscreen is displayed, and an edit object is selected with movement of the pointer within the subscreen, erroneous selection which may occur with slight movement of the pointer is effectively prevented.

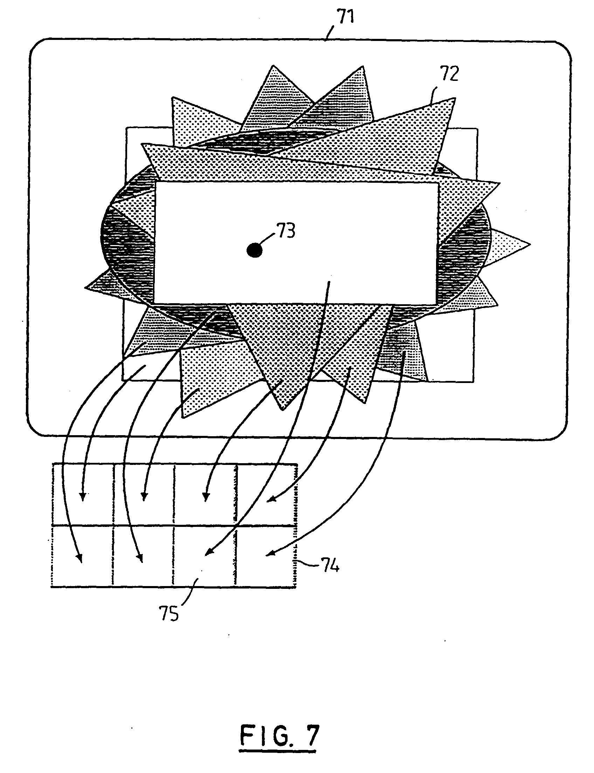

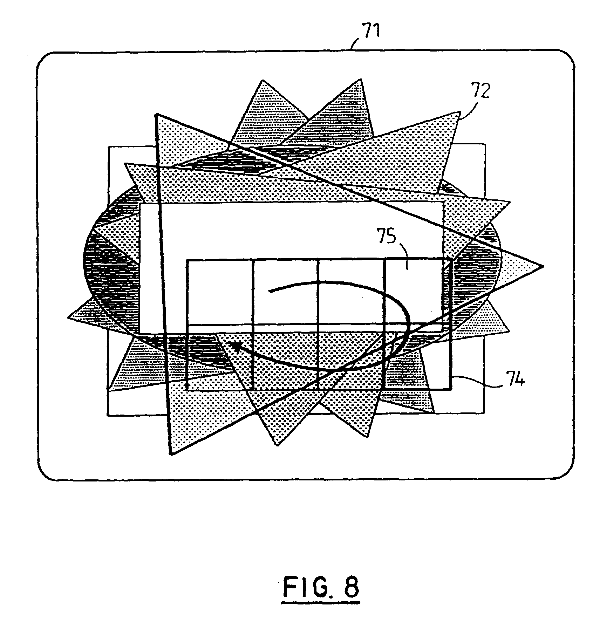

Next, selection when the edit objects are overlapped is described with reference to Figures 7 and 8. Figure 7 shows a state of subscreen where a plurality of figures are overlapped, while Figure 8 schematically shows movement of the pointer on the subscreen and highlighting of the edit objects in the embodiment of the present invention.

Overlapped and displayed on a main screen 71 are eight figures 72 generated by a common graphics application. When it is intended to select one of eight figures, the pointer is moved to an area 73. By specifying a position where a desired figure exists with an input device, eight figures including the desired figure existing at that position are selected as the selective candidates. The selective candidates may be selected based on a preset specified region as described above.

Respective selective candidates are given a number. The numbering may be, for example, according to the depth of each figure. Each selective candidate is caused to correspond to each of eight information regions 75 in the subscreen 74, and displayed as a pop-up menu. Then, the figure corresponding to the information region 75 pointed to by the pointer is highlighted by moving the pointer on the subscreen so that the desired figure can be easily selected.

When editing in a conventional graphics application, it is set to select the uppermost figure so that it is necessary to change the vertical relationship to put the desired figure on the top. However, according to the embodiment, the desired figure can be easily selected without changing the order of figures.

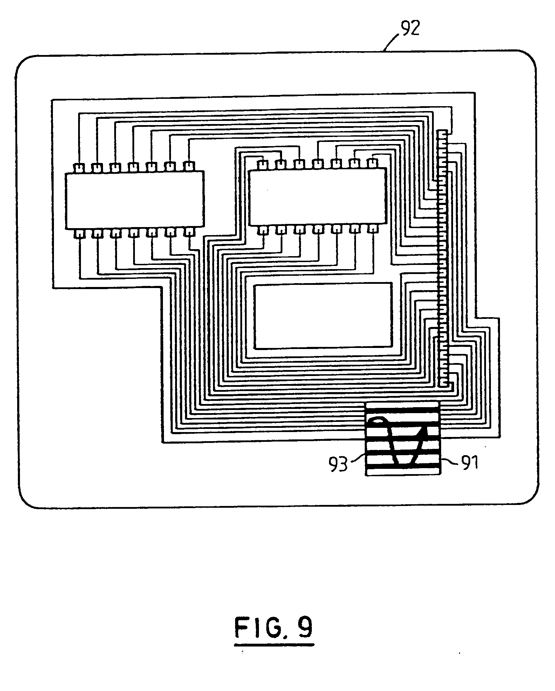

Figure 9 schematically shows movement of the pointer on the subscreen and highlighting of the edit objects in another embodiment of the present invention.

In this embodiment, a subscreen 91 is displayed as the position of the pointer specified on a main screen 92 or as a zoomed screen of the specified region. An information region 93 corresponds to a region in the zoomed screen where respective wiring is displayed. Then, wiring in the main screen corresponding to the wiring as an information region 93 pointed to by the pointer is highlighted by moving the pointer in the zoomed screen. The operator selects the desired wiring while confirming the main screen.

The preferred embodiment of the present invention changes the display of a corresponding edit object in the main screen which is the entire screen by moving the pointer in the zoomed screen. A method where a simple zoomed screen of a predetermined region is simultaneously displayed in addition to an edit screen, and the operator performs selection based on the information only on an enlarged edit object in the zoomed screen is a method commonly used in the conventional graphics application. However, in a case where similar edit objects as the above-mentioned wiring patterns are closely and similarly arranged, it is difficult in such a conventional approach for the operator to distinguish the desired wiring in the enlarged screen from other wiring. On the contrary, according to this embodiment, since wiring corresponding to an information region in the zoomed screen pointed to by the pointer is displayed in a specific display state in the edit screen which indicates the entire situation, the desired edit object can be easily identified even from an edit object with similar shape and similarly arranged.

Furthermore, in the embodiment, the information region including the wiring areas and the adjacent areas may be defined in such a manner that the borders of information regions contact with each other. In addition, it may be displayed as a transparent subscreen only with a contour.

According to preferred embodiments of the present invention, a desired edit object can be selected on a virtually zoomed subscreen from a plurality of edit objects complicatedly arranged on the screen by confirming the entire arrangement while visually distinguishing the desired edit object from others. Because the edit object can be accurately selected with a simple operation, it is possible to improve the efficiency of the edit operation.

## Claims

1. A method of selecting a desired one of a plurality of edit objects displayed on a display screen (1), the method comprising the steps of:
displaying a plurality of edit objects in a main screen area of said display screen (1);
specifying via an input means (2) a desired position of said main screen area;
if there exists a plurality of edit objects at said specified position or within a predetermined region based on said specified position, selecting said plurality of edit objects as selective candidates;
displaying a subscreen on said display screen (1), said subscreen having a plurality of information regions, the respective information regions being arranged to correspond to said respective selective candidates;
enabling a user to move a pointer within said subscreen;
changing the display of said edit object in said main screen area that corresponds to said information region containing said pointer position in said subscreen, so as to facilitate user recognition of the edit object corresponding to that information region; and
specifying one of said information regions displayed in said subscreen, whereby one of said edit objects corresponding to said specified information region is selected.

2. A method as claimed in Claim 1, wherein said subscreen is composed of a plurality of transparent information regions consisting of only a contour.

3. A method as claimed in Claim 1, wherein said subscreen is an enlarged view of the specified position of said main screen area or a predetermined region based on said position, a plurality of information regions being displayed in said subscreen.

4. A method as claimed any of Claims 1 to 3, wherein the shortest one of the distance between the centres of two adjacent information regions displayed is larger than the distance between the two closest ones of edit objects displayed as said selective candidates in said main screen area.

5. A method as claimed in any preceding claim, wherein said subscreen is overlapped and displayed on said main screen area.

6. A method as claimed in any preceding claim, wherein, while said subscreen is being displayed, said pointer can only move in the region of said subscreen.

7. A method as claimed in any preceding claim, wherein said subscreen is a pop-up menu.

8. A method as claimed in any preceding claim, wherein said edit objects are figures, the display of said edit objects on the screen being changed by highlighting the contour of said edit object that corresponds to the information region containing the pointer.

9. A method as claimed in any of Claims 1 to 7,wherein said edit objects are figures, the display of said edit objects on the screen being changed by changing the colour of said edit object that corresponds to the information region containing the pointer to a specific colour.

10. A method as claimed in any preceding claims, wherein the size of said predetermined region is varied by interlocking with the magnification ratio of display of said main screen area.

11. A method as claimed in any preceding claim, wherein the number of said information regions provided is equal to the number of said selective candidates.

12. A method as claimed in any preceding claim, wherein each of said information regions, are rectangles of the same shape arranged in a tile-shaped arrangement within said subscreen.

13. An apparatus for selecting a desired one of a plurality of edit objects displayed on a display screen (1), the apparatus comprising:
display means for displaying a plurality of edit objects in said display screen;
input means (2) for enabling a desired position of said display screen to be specified;
selection means (4) for determining whether or not a plurality of said edit objects exists at said specified position or within a predetermined region based on said specified position, and, if there exists a plurality of edit objects, for selecting said plurality of edit objects as selective candidates;
subscreen display means (5) for displaying a subscreen on said display screen (1), said subscreen having a plurality of information regions, the respective information regions being arranged to correspond to said respective selective candidates;
said input means (2) being arranged to enable a user to move a pointer within said subscreen, the display of said edit object in said display screen corresponding to said information region containing said pointer being changed so as to enable the user to recognize said edit object corresponding to that information region;
the user being able to select a desired edit object by specifying via the input device an information region corresponding to the desired edit object.

14. A system as claimed in Claim 13 wherein said subscreen is a pop-up menu.

15. A system as claimed in Claim 13 or Claim 14, wherein said edit objects are figures, the display of said edit objects on the screen being changed by highlighting the contour of said edit object that corresponds to the information region containing the pointer.

16. A system as claimed in Claim 13 or Claim 14, wherein said edit objects are figures, the display of said edit objects on the screen being changed by changing the colour of said edit object that corresponds to the information region containing the pointer to a specific colour.
